# EUROPÄISCHE PATENTSCHRIFT

(11) **EP 2 090 352 B1**
(45) Veröffentlichungstag und Bekanntmachung des Hinweises auf die Patenterteilung: **09.09.2020**
(21) Anmeldenummer: 08018138.1
(22) Anmeldetag: 16.10.2008
(51) Int. Cl.: B01D 53/94, B01J 23/22, B01J 23/28, B01J 23/30, B01J 23/34, B01J 23/70, B01J 23/76, B01J 29/072, F01N 3/035, B01J 35/04, B01J 37/02, F01N 3/20

(54) **Vorrichtung zur Verminderung von Dibenzo-Dioxin- und Dibenzo-Furan-Emissionen aus übergangsmetallhaltigen Katalysatoren**
Device for reducing dibenzo-dioxin and dibenzo-furan emissions from catalytic converters containing transition metals
Dispositif de réduction d'émissions de Dibenzo-dioxine et Dibenzo-furane de catalyseurs contenant du métal transitoire

(30) Priorität: 12.02.2008 DE 102008008748
(43) Veröffentlichungstag der Anmeldung: 19.08.2009
(73) Patentinhaber: MAN Truck & Bus SE, 80995 München (DE)
(72) Erfinder: Döring, Andreas, 82008 München (DE)
(74) Vertreter: Liebl, Thomas

(56) Entgegenhaltungen:
- EP-A- 1 602 403
- EP-A- 1 795 724
- WO-A-99/49956
- WO-A-2008/006427
- US-A1- 2006 039 843
- US-B1- 7 062 904

## Beschreibung

Die Erfindung richtet sich auf eine Vorrichtung nach dem Oberbegriff von Anspruch 1.

Stickoxide gehören zu den limitierten Abgaskomponenten, die während Verbrennungsvorgängen entstehen und deren erlaubte Emissionen unter Umweltgesichtspunkten immer weiter abgesenkt werden sollen. Die Verringerung der Stickoxide erfolgt dabei meist mit Hilfe von Katalysatoren. In sauerstoffreichem Abgas ist zusätzlich ein Reduktionsmittel erforderlich, um die Selektivität und die NOₓ-Umsätze anzuheben. Diese Verfahren wird als selektive katalytische Reduktion, kurz SCR, bezeichnet und wird seit 1980 im Kraftwerksbereich eingesetzt. Als SCR- Katalysatoren können V₂O₅- haltige Mischoxide, beispielsweise in der Form V₂O₅/WO₃/TiO₂, verwendet werden. Typische V₂O₅- Anteile liegen dabei zwischen 0,2-3%. Als Reduktionsmittel kommen Ammoniak oder ammonikabspaltende Verbindungen, wie Harnstoff oder Ammoniumformiat, in fester oder Lösungsform, zum Einsatz. Die Reaktion verläuft wie folgt:

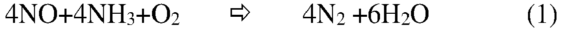

Besondere Probleme bereitet das SCR- Verfahren bei der Stickoxidreduzierung von Brennkraftmaschinen und hier speziell in Fahrzeugen, da darauf geachtet werden muss, dass es nicht zur Emission von unverbrauchtem Ammoniak kommt. Anders als im Kraftwerksbereich stehen keine ausreichend genauen und haltbaren Abgassensoren zur Regelung des Systems in Fahrzeugen und damit zur Vermeidung von NH₃-Emissionen bei Überdosierungen zur Verfügung.

Zur Minimierung der Feinstoffpartikel werden sowohl im Kraftwerksbereich als auch bei Fahrzeugen entweder sogenannte Partikelabscheider oder Partikelfilter eingesetzt.

Eine für die Anwendung in Fahrzeugen typische Anordnung mit Partikelabscheider ist beispielsweise in der EP 1 072 765 A1 beschrieben. Derartige Anordnungen unterscheiden sich von solchen mit Partikelfiltern dadurch, dass der Durchmesser der Kanäle des Partikelabscheiders wesentlich größer als der Durchmesser der größten vorkommenden Partikel ist während bei Partikelfiltern der Durchmesser der Filterkanäle im Bereich der Durchmesser der Partikel liegt. Infolge dieses Unterschiedes sind Partikelfilter verstopfungsgefährdet, was den Abgasgegendruck erhöht und die Motorleistung mindert. Eine Anordnung und ein Verfahren mit Partikelfilter ist der EP 0 341 832 A2 zu entnehmen. Die beiden vorgenannten Anordnungen bzw. Verfahren zeichnen sich dadurch aus, dass der jeweils stromauf zum Partikelabscheider bzw. Partikelfilter angeordnete Oxidationskatalysator - zumeist ein Katalysator mit Platin als Aktivmaterial - das Stickstoffmonoxid im Abgas mit Hilfe des ebenfalls enthaltenen Restsauerstoffes zu Stickstoffdioxid oxidiert.

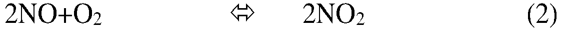

Dabei ist zu beachten, dass das Gleichgewicht der obigen Reaktion bei hohen Temperaturen auf der Seite von NO liegt. Dies hat zur Folge, dass die erzielbaren NO₂-Anteile bei hohen Temperaturen auf Grund dieser thermodynamischen Begrenzung limitiert sind.

Dieses NO₂ setzt sich wiederum im Partikelabscheider, bzw. Partikelfilter mit den Kohlenstoffpartikeln zu CO, CO₂, N₂ und NO um.

Mit Hilfe des starken Oxidationsmittels NO₂ erfolgt eine kontinuierliche Entfernung der angelagerten Feinstoffpartikel, Regenerationszyklen, wie sie aufwändig bei anderen Anordnungen durchgeführt werden müssen, entfallen dadurch. Man spricht daher von einer "passiven" Regeneration.

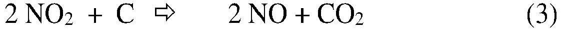

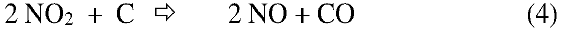

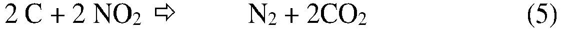

Gelingt keine vollständige Oxidation des im Partikelfilter eingelagerten Kohlenstoffs mit Hilfe von NO₂, so steigt der Kohlenstoffanteil und damit der Abgasgegendruck stetig an.

Um dies zu vermeiden, werden aktuell die Partikelfilter vermehrt mit einer katalytischen Beschichtung zur Oxidation von NO versehen. Dabei handelt es sich meist, wie bereits oben beschrieben, um platinhaltige Katalysatoren. Der Nachteil dieses Verfahrens besteht allerdings darin, dass das am Partikelfilter gebildete NO₂ nur zur Oxidation von Partikeln dienen kann, die stromab der katalytisch aktiven Schicht zur NO-Oxidation abgeschieden wurden, also innerhalb des Filtermediums. Bildet sich dagegen auf der Filteroberfläche und damit auf der katalytisch aktiven Schicht eine Schicht aus abgeschiedenen Partikeln, ein so genannter Filterkuchen, aus, so liegt der NO- Oxidationskatalysator stromab des Filterkuchens, so dass die dort abgeschiedenen Rußpartikel nicht mit Hilfe von NO₂ aus dem auf dem Partikelfilter aufgebrachten NO-Oxidationskatalysator oxidiert werden können.

Hinzu kommt noch, dass genau genommen, nur die auf der Rohgasseite aufgebrachte Katalysatorschicht zur Performance des Systems beiträgt, da das auf der Reingasseite katalytisch gebildete NO₂ nicht mehr in Kontakt mit dem auf der Rohgasseite und innerhalb des Filtermaterials abgeschiedenen Ruß kommen kann.

Ein weiteres Problem der Beschichtung des Partikelfilters ist, dass die geometrischen Oberflächen des Filters deutlich geringer als die der üblicherweise eingesetzten Katalysatorsubstrate sind. Der Grund hierfür liegt darin, dass die Filter relativ große freie Querschnitte und damit freies Volumen auf der Rohgasseite benötigen, um Ruß und Motorölasche einzulagern. Werden keramische Filtersubstrate eingesetzt, wird dies durch eine geringe Zelligkeit von 50cpsi-200cpsi realisiert. Demgegenüber werden reine Katalysatoren üblicherweise mit Zelldichten von 400cpsi-900cpsi ausgeführt. Durch die Anhebung von 50cpsi auf 900cpsi ergibt sich eine Erhöhung der geometrischen Oberfläche von 1m²/l auf 4m²/l, wodurch erhebliche Umsatzsteigerungen an den Katalysatoren möglich werden.

Aus diesen Gründen kann, trotz der katalytischen Beschichtung des Filters, nicht auf einen NO-Oxidationskatalysator vor dem Partikelfilter verzichtet werden, so dass sich ein relativ großes Bauvolumen ergibt. Dies ist selbst dann der Fall, wenn die NO-Oxidationskatalysatoren und die Partikelfilter eine bauliche Einheit bilden, indem der Eintrittsbereich des Partikelfilters als NO-Oxidationskatalysator ausgeführt ist (DE 10327030 A1).

Obwohl durch diese Maßnahmen eine Rußoxidation noch bis zu Temperaturen von 250°C möglich ist, gibt es dennoch Anwendungsfälle, in denen selbst diese Abgastemperaturen nicht erreicht werden und somit keine sichere Funktion des Partikelfilters sichergestellt werden kann. Dies tritt üblicherweise bei schwachbelasteten und in Fahrzeugen verbauten Motoren, beispielsweise bei Personenkraftwagen, Linienbussen oder Müllfahrzeugen, die noch zusätzlich hohe Leerlaufanteile aufweisen, auf.

Daher wird, speziell in solchen Fällen, eine zweite Möglichkeit der Partikelfilterregeneration angewendet: Sie besteht darin, die Abgastemperatur aktiv anzuheben. Dies gelingt üblicherweise durch die Zugabe von Kohlenwasserstoffen stromauf von Oxidationskatalysatoren. Durch die exotherme Oxidation der Kohlenwasserstoffe an den Katalysatoren kommt es zu einem deutlichen Temperaturanstieg.

Gelingt dadurch eine Temperaturanhebung auf über 600°C, kommt es zu einer Oxidation des Kohlenstoffs mit Hilfe von Sauerstoff.

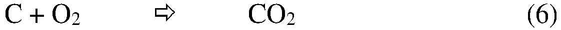

Allerdings besteht bei dieser sogenannten "aktiven" Filterregeneration die Gefahr, dass es durch das Abbrennen des Rußes zu einem starken, unkontrollierten Temperaturanstieg auf bis zu 1000°C und damit meist zur Schädigung des Partikelfilters und/oder nachgeschalteter Katalysatoren kommt.

Da die Temperaturerhöhung für mehrere Minuten aufrechterhalten werden muss, um eine quantitative Oxidation der Rußpartikel sicherzustellen, ist der Bedarf an Kohlenwasserstoffen nicht unerheblich und verschlechtert, da üblicherweise der Kraftstoff der Brennkraftmaschine als Kohlenwasserstoffquelle verwendet wird, deren Wirkungsgrad.

Die Zugabe der Kohlenwasserstoffe kann durch eine, im Abgastrakt angebrachte, separate Einspritzdüse erfolgen. Eine weitere Möglichkeit besteht darin, über eine späte Nacheinspritzung des Kraftstoffs in den Brennraum, hohe Kohlenwasserstoffemissionen zu generieren.

Um die zukünftig geltenden Abgasbestimmungen zu erfüllen, ist der gleichzeitige Einsatz sowohl von Anordnungen zur Reduzierung der Stickoxidemission, als auch von Anordnungen zur Reduzierung der Feinstoffpartikelemission erforderlich.

Eine Lösung besteht darin, den Partikelfilter mit SCR-aktivem Material zu beschichten (JP 2004-376102). Hierbei gestaltet sich allerdings der Einsatz von V₂O₅ als SCR-Aktivkomponente schwierig. Der Grund hierfür liegt in der geringen thermischen Stabilität dieser Katalysatoren. So kommt es bei Abgastemperatur von über 650°C zur Sublimation von V₂O₅. Da diese Temperaturen, wie bereits oben beschrieben, an Partikelfiltern durchaus auftreten können, werden für diese und andere Hochtemperaturanwendungen V₂O₅-freie übergangsmetallhaltige, insbesondere eisen- , kobalt- oder kupferhaltige, Katalysatoren eingesetzt. Als besonders vorteilhaft hat es sich in diesem Zusammenhang erwiesen, diese Übergangsmetalle durch Ionenaustauch in Zeolithe zu integrieren (DE 3 912 596 C2). Auf Grund der sehr großen Oberfläche der Zeolithe gelingt dadurch eine erhebliche Vergrößerung der aktiven Oberfläche und damit, besonders bei tiefen Temperaturen, eine deutliche Steigerung der erreichbaren Umsätze.

Der Nachteil dieser übergangsmetallhaltigen Katalysatoren liegt allerdings darin, dass sie unter Anwesenheit von Chlorid und Kohlenwasserstoffen im Temperaturbereich zwischen 200-400°C hochtoxische polychlorierte Dibenzo-Dioxine (PCDD) und polychlorierte Dibenzo-Furane (PCDF) bilden.

Im Fahrzeug gelangt das für die Dioxinbildung notwendige Chlorid z. B. über Biokraftstoffe, das Motorenöl oder die Ansaugluft (Salzstreuung im Winter, Fahren in Küstennähe) ins Abgas und damit an die Katalysatoren. Die für die Bildung von PCDD und PCDF notwendigen Kohlenwasserstoffe sind auf Grund der unvollständigen Verbrennung des Kraftstoffs ohnehin im Abgas enthalten.

Aus der US 2006/0039843 A1 ist ein Zonenschalen-Katalysator zur gleichzeitigen Verringerung von NOₓ und nicht umgesetztem Ammoniak bekannt.

Die US 7,062,904 B1 zeigt eine Vorrichtung mit einem Partikelfilter, der sowohl anströmseitig als auch abströmseitig mit einem katalytischen Element versehen ist, das beispielsweise V₂O₅ auf Titanoxid enthält.

Dokument EP 1 236 498 A1 offenbart eine Vorrichtung zur Minderung von PCDD und PCDF Emissionen in Verbrennungsabgasen.

Die erfindungsgemäße Vorrichtung löst das Problem der Bildung, beziehungsweise der Emission, von polychlorierte Dibenzo-Dioxine (PCDD) und polychlorierte Dibenzo-Furane (PCDF) an übergangsmetallhaltigen, insbesondere eisen- und/oder kupfer- und/oder kobalthaltigen, Katalysatoren gemäß dem Patentanspruch 1. Vorteilhafte Ausgestaltungen der erfindungsgemäßen Vorrichtung sind in den Unteransprüchen gekennzeichnet.

Der Grundgedanke besteht darin, den kupfer- und/oder eisen- und/oder kobalthaltigen Katalysatoren einen Katalysator zur Zersetzung von Dioxinen und Furanen nachzuschalten und einen Katalysator zur Oxidation von kohlenwasserstoffhaltigen Dioxin- und Furanvorläufersubstanzen vorzuschalten, wobei der nachgeschaltete PCDD-/ PCDF-Zersetzungskatalysator und der vorgeschaltete Katalysator zur Oxidation von kohlenwasserstoffhaltigen Dioxin- und Furanvorläufersubstanzen zudem ebenfalls eine SCR-Aktivität in Gegenwart von Ammoniak besitzt. Durch die Zusammenfassung von zwei Funktionen, nämlich die PCDD- und PCDF- Zersetzung bzw. die Oxidation der PCDD- und PCDF-Vorläufersubstanzen sowie die Reduktion von Stickoxiden mit Hilfe von NH₃, gelingt es, das Bauvolumen der gesamten Abgasnachbehandlung gering zu halten. Erfindungsgemäß ist stromauf des wenigstens einen übergangsmetallhaltigen SCR- Katalysators der wenigstens eine Katalysator zur Oxidation von kohlenwasserstoffhaltigen PCDD- und PCDF- Vorläufersubstanzen angeordnet, wobei der wenigstens eine Katalysator zur Oxidation von kohlenwasserstoffhaltigen PCDD- und PCDF-Vorläufersubstanzen zusätzlich eine Aktivität zur Reduktion von Stickoxiden mit Hilfe von Ammoniak aufweist. Ferner ist erfindungsgemäß der übergangsmetallhaltige SCR-Katalysator auf einem als Träger wirkenden Partikelfilter und der Katalysator zur Oxidation der kohlenwasserstoffhaltigen PCDD- und PCDF- Vorläufersubstanzen auf der Rohgasseite des Partikelfilters ausgebildet. Weiter ist erfindungsgemäß stromab des wenigstens einen übergangsmetallhaltigen SCR-Katalysators der wenigstens ein Katalysator zur Zersetzung von PCDD und PCDF angeordnet, wobei der wenigstens eine Katalysator zur Zersetzung von PCDD und PCDF zusätzlich eine Aktivität zur Reduktion von Stickoxiden mit Hilfe von Ammoniak aufweist. Darüber hinaus ist auch der Katalysator zur Oxidation von kohlenwasserstoffhaltigen PCDD- und PCDF- Vorläufersubstanzen auf dem Partikelfilter aufgebracht. Erfindungsgemäß ist der Katalysator zur Zersetzung von PCDD und PCDF auf der Reingasseite des Partikelfilters ausgebildet.

In diesem Zusammenhang hat sich der Einsatz von titandioxidgetragenem und wolframoxidstabilisiertem Vanadiumpentoxid (V₂O₅/WO₃/TiO₂) als besonders vorteilhaft erwiesen. Wie bereits oben beschrieben, weist es, neben einer hohen PCDD- und PCDF-Oxidationsaktivität, eine sehr gute SCR- Aktivität auf. Allerdings muss bei der Verwendung von V₂O₅ sichergestellt werden, dass die Abgastemperaturen an den V₂O₅-haltigen Katalysatoren 650°C nicht übersteigen. In nicht von der Erfindung umfasster Weise gelingt dies, wenn diese Katalysatoren stromab der übergangsmetallhaltigen SCR-Katalysatoren angeordnet werden. Aufgrund ihrer thermischen Masse dämpfen die SCR- Katalysatoren eventuell auftretende Temperaturspitzen und schützen dadurch die vanadiumhaltigen Katalysatoren vor einer thermischen Schädigung.

Reicht dies nicht aus, kann in nicht von der Erfindung umfasster Weise der Wärmeübergang zur Umgebung stromauf der vanadiumhaltigen Katalysatoren verbessert werden. Dadurch erhöhen sich die Wärmeverluste des Abgases, wodurch sich im Gegenzug die Abgastemperaturen verringern. Der Wärmeübergang kann durch Kühlung des Abgases, z.B. durch Kühlrippen, durch örtliche Trennung des übergangsmetallhaltigen SCR-Katalysators und des PCDD- Zersetzungskatalysators, beispielsweise durch Verbau in getrennten Schalldämpfern, und/oder durch eine verlängerte Abgasführung verbessert werden. Eine Möglichkeit, die thermischen Eigenschaften von Vanadium zu verbessern, besteht darin, Vanadium und/oder dessen Oxide, analog zu den Aktivkompenten des SCR- Katalysators, durch Ionenaustauch in eine Zeolithstruktur einzubetten. Durch die Einbindung in das Zeolithgitter erhöhen sich, auf Grund der hohen Dampfdrücke innerhalb der Porenstruktur, die Sublimationstemperaturen erheblich, so dass der Einsatz von Vanadium selbst bis zu 750°C möglich wird.

In diesem Zusammenhang haben sich Zeolithe mit Gitterstrukturen vom Typ AEN, OSI, EPI, ERI, FER, FAU, OFF, MFI, LTL, VFI, MAZ, MEI, EMT, CHA, KFI, BEA, MFS, MEL, MTW, EUO, MTT, HEU, FER, TON und MOR als besonders vorteilhaft erwiesen. Die vorstehenden Bezeichnungen entsprechen der IZA Nomenklatur, wobei IZA für International Zeolite Association steht. Unter anderem finden sich diese Gitterstrukturen bei Zeolithtypen wie Mordenith, Epistilbit, Chabazit, Erionit, Mazzit, Ferrierit, Faujasit, Offretit, ZSM-5, ZSM-4, ZSM-5, ZSM-12, ZSM-18, ZSM-20, ZSM-22, ZSM-23, ZSM-34, ZSM-35, ZSM-38, ZSM-48, ZSM-50, Omega, Beta, Zeolith A, Zeolith L, Zeolith Y, Zeolith X, ZK-4, ZK-5, ZK-14, ZK-20, ZK-21 und ZK22, wodurch diese Materialien, jeweils einzeln oder in Kombination, besonders für die Herstellung der PCDD- bzw. PCDF-Zersetzungskatalysatoren, sowie der Oxidationskatalysatoren zur Zersetzung der PCDD- bzw. PCDF-Vorläufersubstanzen geeignet sind.

Selbstverständlich können die angesprochenen Zeolithe auch für die Herstellung des übergangsmetallhaltigen SCR-Katalysators eingesetzt werden.

Neben dem vorstehend erwähnten Vanadium lassen sich natürlich auch andere Elemente, die eine SCR-Aktiviät und eine PCDD- bzw. PCDF-Zersetzungsaktivität besitzen, einsetzen. Dies sind u.a. Wolfram, Titan, Lanthan, Molybdän, Cer oder Mangan. Wie schon für Vanadium beschrieben, können auch diese Materialien in eine Zeolithstruktur eingebettet werden, wodurch sich, neben der verbesserten thermischen Stabilität, höhere Umsatzraten ergeben. Gleiches gilt für die Aktivkomponenten der Katalysatoren zur Oxidation der PCDD- /PCDF-Vorläufersubstanzen, wobei es sich hierbei um Wolfram, Vanadium, Lanthan, Molybdän, Cer oder handelt.

Wenn dagegen keine Gefahr der thermischen Schädigung besteht, können die V₂O₅-haltigen Katalysatoren stromauf der übergangsmetallhaltigen SCR- Katalysatoren angeordnet werden, wodurch, wie oben ausgeführt, eine Oxidation der PCDD-/ PCDF- Vorläufersubstanzen erreicht wird, so dass bereits die Bildung von polychlorierten Dibenzo-Dioxinen und polychlorierten Dibenzo-Furanen verhindert wird.

Die größte Sicherheit gegenüber der Emission von PCDD und PCDF wird durch das Anbringen der V₂O₅-haltigen Katalysatoren stromauf und stromab der eisen- und/oder kobalt- und/oder kupferhaltigen SCR- Katalysatoren erzielt.

Die vorstehend wiederholt angesprochene Verwendung von V₂O₅-haltigen Katalysatoren ist nur beispielhaft zu verstehen, in Frage kommen selbstverständlich alle aktiven Substanzen, die eine Zersetzung von PCDD bzw. PCDF bzw. eine Oxidation ihrer Vorläufersubstanzen bewirken.

Der Partikelfilter mit den drei Katalysatortypen - übergangmetallhaltiger SCR-Katalysator, Katalysator zur Oxidation von PCDD-/ PCDF- Vorläufersubstanze und Katalysator zur Zersetzung von PCDD und PCDF - kann in einem Schalldämpfer verbaut werden.

Alle beschriebenen Katalysatoren können durch Beschichtung eines keramischen oder metallischen Trägers hergestellt werden. Durch die nicht von der Erfindung umfasste Extrusion ergeben sich üblicherweise wabenförmige Katalysatoren mit parallelen Strömungskanälen (DE 22 22 468 C2), während sich die Form und die Ausrichtung der Strömungskanäle bei der Verwendung von metallischen Katalysatorträgern weitestgehend frei wählen lässt.

Der übergangsmetallhaltige SCR-Katalysator und der PCDD-/ PCDF- Zersetzungskatalysator und der Oxidationskatalysator für die PCDD-/ PCDF-Vorläufersubstanzen bilden eine bauliche Einheit indem sie auf einem gemeinsamen Katalysatorsubstrat aufgebracht werden. Unter dem Begriff Substrat ist ein Träger im weitesten Sinne zu verstehen.

Bilden z.B. ein SCR-Katalysator und ein PCDD-/ PCDF- Zersetzungskatalysator eine bauliche Einheit, so können sie im einfachsten Fall hintereinander angeordnet sein. Dies gelingt beispielsweise durch die Beschichtung eines Katalysator- oder Filtersubstrats mit übergangsmetallhaltigem SCR- aktivem Material auf der Eintrittsseite und mit Material mit PCDD- und/oder PCDF- Zersetzungs- und SCR-Aktivität auf der Austrittsseite. Üblicherweise wird dies durch das Aufbringen von unterschiedlichen Washcoats und anschließender Trocknung und Kalzinierung erreicht. Entsprechendes gilt, wenn ein SCR-Katalysator und ein Katalysator für Oxidation der PCDD- bzw. PCDF-Vorläufersubstanzen baulich zu vereinen sind, allerdings befindet sich hier der übergangsmetallhaltige Katalysator stromab des Katalysators zur Oxidation der PCDD- bzw. PCDF-Vorläufersubstanzen. Erfindungsgemäß ist der Katalysator zur Oxidation der PCDD-/ PCDF-Vorläufersubstanzen am Eintritt eines gemeinsamen Katalysatorsubstrates angebracht, gefolgt von einem übergangsmetallhaltigen SCR-Katalysator und einem am Austritt angebrachten PCDD-/ PCDF- Zersetzungskatalysator. Bei dem gemeinsamen Katalysatorsubstrat handelt es sich um einen Partikelfilter.

Um die Reingasseite der Partikelfiltersubstrate mit einer katalytisch aktiven Schicht zur Zersetzung von PCDD und PCDF zu versehen, stehen mehrere unterschiedliche Verfahren zur Auswahl.

Zum einen ist die Aufbringung einer PCDD- und/oder PCDF- Zersetzungsschicht, ähnlich der Beschichtung von Katalysatorsubstraten mit Katalysatorwashcoat, auf der Reingasseite denkbar. Anschließend muss diese Schicht, analog zur Verarbeitung an Katalysatorsubstraten, getrocknet und kalziniert werden, um eine stabile und feste Verbindung zwischen ihr und dem Filtersubstrat und/oder dem übergangsmetallhaltigen SCR- Katalysator, der ebenfalls auf dem Filtersubstrat aufgebracht ist, sicherstellen zu können. Allerdings ist bei Beschichtung des Filtersubstrats mit dem übergangsmetallhaltigem Katalysator und dem PCDD-/ PCDF- Zersetzungskatalysator darauf zu achten, dass letzterer erfindungsgemäß immer stromab des übergangsmetallhaltigen Katalysators, also in Richtung der Reingasseite des Filtersubstrats, angebracht ist. Wie bereits oben erwähnt, kann die PCDD- und/oder PCDF- Zersetzungsschicht unter anderem Wolfram, Lanthan, Molybdän, Cer, Mangan, Vanadium und/oder Zeolithe enthalten.

Zum anderen ist es auch möglich, eine PCDD- und/oder PCDF- Zersetzungsschicht durch Imprägnieren, des auf dem Filtersubstrat aufgebrachten, übergangsmetallhaltigen SCR- Katalysators mit den entsprechenden Aktivkomponenten auszubilden. Wie bereits oben erwähnt, ist die Imprägnierung auf der, der Reingasseite zugewandten Oberfläche des übergangsmetallhaltigen Katalysators durchzuführen. Eine weitere Möglichkeit zur Herstellung einer besonders dünnen PCDD-/ PCDF-Zersetzungsschicht, besteht, vor allem bei der Verwendung von zeolithhaltigen SCR- Katalysatoren, darin, ein Übergangsmetall an der Katalysatoroberfläche durch Ionenaustausch gegen ein anderes Ion, das eine PCDD- oder PCDF- Oxidationsaktivität besitzt, zu substituieren. Im einfachsten Fall gelingt dies durch Einbringen eines aciden Fluids. Dadurch werden die Übergangsmetallionen in der Zeolithstruktur durch Protonen aus dem sauren Fluid ersetzt. Anschließend werden die Protonen wiederum gegen Metallkationen mit PCDD- Oxidationsaktivität ausgetauscht. Wie bereits oben beschrieben, bieten sich hierfür Wolfram, Lanthan, Molybdän, Cer, Mangan oder Vanadium an. Je nach Affinität dieser Elemente kann auf den Zwischenschritt der Protonierung verzichtet werden und durch Wahl eines geeigenten pH-Werts die Übergangsmetalle direkt ausgetauscht werden.

Die oben dargstellten Verfahren zur Ausbildung der PCDD- und PCDF-Zersetzungsschicht auf einem Partikelfilter können in vorteilhafter Weise auch bei der Schicht zur Oxidation der PCDD- und PCDF- Vorläufersubstanzen angewendet werden. Der grundlegende Unterschied beseht darin, das diese Schicht dem Partikelfilter erfindungsgemäß stets auf der, der Rohgasseite zugewandten Oberfläche des übergangsmetallhaltigen Katalysators angebracht wird.

Der Partikelfilter kann aus Sintermetall und/oder Keramik und/oder Filterschaum und/oder Keramikfasern und/oder Quarzfasern und/oder Glasfasern und/oder Siliziumcarbid und/oder Aluminiumtitanat bestehen.

Um eine möglichst quantitative Zersetzung von PCDD, PCDF und/oder deren Vorläufersubstanzen sicherzustellen, ist eine ausreichend große geometrische Oberfläche des PCDD-/ PCDF- Zersetzungskatalysators und/oder des Katalysators zur Oxidation der PCDD-/ PCDF-Vorläufersubstanzen notwendig. Üblicherweise liegt daher deren geometrische Oberfläche im Bereich von 30% bis 300% der Oberfläche des übergangsmetallhaltigen SCR- Katalysators.

## Patentansprüche

1. Vorrichtung zur Verminderung der Emissionen von polychlorierten Dibenzo-Dioxinen (PCDD) und polychlorierten Dibenzo-Furanen (PCDF) aus übergangsmetallhaltigen Katalysatoren zur selektiven katalytischen Reduktion von Stickoxiden im Abgas einer Brennkraftmaschine mit Hilfe von Ammoniak und/oder ammoniakabspaltenden Reduktionsmitteln, **dadurch gekennzeichnet, dass**
- stromauf des wenigstens einen übergangsmetallhaltigen SCR- Katalysators wenigstens ein Katalysator zur Oxidation von kohlenwasserstoffhaltigen PCDD- und PCDF- Vorläufersubstanzen angeordnet ist, wobei der wenigstens eine Katalysator zur Oxidation von kohlenwasserstoffhaltigen PCDD- und PCDF-Vorläufersubstanzen zusätzlich eine Aktivität zur Reduktion von Stickoxiden mit Hilfe von Ammoniak aufweist,
- stromab des wenigstens einen übergangsmetallhaltigen SCR-Katalysators wenigstens ein Katalysator zur Zersetzung von PCDD und PCDF angeordnet ist, wobei der wenigstens eine Katalysator zur Zersetzung von PCDD und PCDF zusätzlich eine Aktivität zur Reduktion von Stickoxiden mit Hilfe von Ammoniak aufweist,
- der übergangsmetallhaltige Katalysator zur selektiven katalytischen Reduktion von Stickoxiden und der Katalysator zur Zersetzung von PCDD und PCDF und der Katalysator zur Oxidation von kohlenwasserstoffhaltigen PCDD- und PCDF- Vorläufersubstanzen auf dem Partikelfilter aufgebracht sind,
- der Katalysator zur Oxidation der kohlenwasserstoffhaltigen PCDD- und PCDF- Vorläufersubstanzen auf der Rohgasseite des Partikelfilters ausgebildet ist und der Katalysator zur Zersetzung von PCDD und PCDF auf der Reingasseite des Partikelfilters ausgebildet ist.

2. Vorrichtung nach Anspruch 1, **dadurch gekennzeichnet, dass** es sich bei den Übergangsmetallen um Eisen und/oder Kupfer und/oder Kobalt handelt.

3. Vorrichtung nach Anspruch 1 oder 2, **dadurch gekennzeichnet, dass** der Katalysator zur Zersetzung von PCDD und PCDF als Aktivkomponenten Wolfram und/oder Titan und/oder Lanthan und/oder Molybdän und/oder Cer und/oder Mangan und/oder Vanadium und/oder deren Oxide enthält.

4. Vorrichtung nach einem der vorhergehenden Ansprüche, **dadurch gekennzeichnet, dass** der Katalysator zur Oxidation der PCDD- und PCDF-Vorläufersubstanzen als Aktivkomponenten Wolfram und/oder Lanthan und/oder Molybdän und/oder Cer und/oder Mangan und/oder Vanadium und/oder deren Oxide enthält.

5. Vorrichtung nach einem der vorhergehenden Ansprüche, **dadurch gekennzeichnet, dass** der übergangsmetallhaltige Katalysator zur selektiven katalytischen Reduktion von Stickoxiden und/oder der Katalysator zur Oxidation der kohlenwasserstoffhaltigen PCDD- und PCDF-Vorläufersubstanzen Zeolithe enthält.

6. Vorrichtung nach einem der vorhergehenden Ansprüche, **dadurch gekennzeichnet, dass** der Katalysator zur Zersetzung von PCDD und PCDF Zeolithe enthält.

7. Vorrichtung nach Anspruch 5 oder 6, **dadurch gekennzeichnet, dass** die Zeolithe Gitterstrukturen vom Typ AEN und/oder OSI und/oder EPI und/oder ERI und/oder FER und/oder FAU und/oder OFF und/oder MFI und/oder LTL und/oder VFI und/oder MAZ und/oder MEI und/oder EMT und/oder CHA und/oder KFI und/oder BEA und/oder MFS und/oder MEL und/oder MTW und/oder EUO und/oder MTT und/oder HEU und/oder FER und/oder TON und/oder MOR umfassen.

8. Vorrichtung nach einem der Ansprüche 5 bis 7, **dadurch gekennzeichnet, dass** die Zeolithe vom Typ Mordenith und/oder Epistilbit und/oder Chabazit und/oder Erionit und/oder Mazzit und/oder Ferrierit und/oder Faujasit und/oder Offretit und/oder ZSM-3 und/oder ZSM-4 und/oder ZSM-5 und/oder ZSM-12 und/oder ZSM-18 und/oder ZSM-20 und/oder ZSM-22 und/oder ZSM-23 und/oder ZSM-34 und/oder ZSM-35 und/oder ZSM-38 und/oder ZSM-48 und/oder ZSM-50 und/oder Omega und/oder Beta und/oder Zeolith A und/oder Zeolith L und/oder Zeolith Y und/oder Zeolith X und/oder ZK-4 und/oder ZK-5 und/oder ZK-14 und/oder ZK-20 und/oder ZK-21 und/oder ZK22, einzeln oder in beliebiger Kombination, sind.

9. Vorrichtung nach einem der vorhergehenden Ansprüche, **dadurch gekennzeichnet, dass** der übergangsmetallhaltige Katalysator zur selektiven katalytischen Reduktion von Stickoxiden und/oder der Katalysator zur Oxidation von kohlenwasserstoffhaltigen PCDD- und PCDF- Vorläufersubstanzen durch Beschichtung eines, insbesondere keramischen oder metallischen, Trägers hergestellt sind.

10. Vorrichtung nach einem der vorhergehenden Ansprüche, **dadurch gekennzeichnet, dass** der Katalysator zur Zersetzung von PCDD und PCDF durch Beschichtung eines, insbesondere keramischen oder metallischen, Trägers hergestellt sind.

11. Vorrichtung nach einem der vorhergehenden Ansprüche, **dadurch gekennzeichnet, dass** der übergangsmetallhaltige SCR-Katalysator durch Beschichtung eines Partikelfilters mit einem übergangsmetallhaltigen Zeolith hergestellt ist und mindestens ein Übergangsmetall an der der Rohgasseite zugewandten Katalysatoroberfläche durch Ionenaustausch gegen mindestens ein anderes Metall, das eine Oxidationsaktivität für kohlenwasserstoffhaltigen PCDD- und/oder PCDF-Vorläufersubstanzen besitzt, ausgetauscht ist

12. Vorrichtung nach einem der Ansprüche 1 bis 10, **dadurch gekennzeichnet, dass** der übergangsmetallhaltige SCR-Katalysator durch Beschichtung eines Partikelfilters hergestellt ist und auf der Rohgasseite ein Katalysator zur Oxidation von kohlenwasserstoffhaltigen PCDD- und/oder PCDF-Vorläufersubstanzen mit Hilfe eines Washcoats aufgebracht ist.

13. Vorrichtung nach einem der vorhergehenden Ansprüche, **dadurch gekennzeichnet, dass** der Partikelfilter aus Metall und/oder Sintermetall und/oder Keramik und/oder Schaum und/oder Keramikfasern und/oder Quarzfasern und/oder Glasfasern und/oder Siliziumcarbid und/oder Aluminiumtitanat besteht.

14. Vorrichtung nach einem der vorhergehenden Ansprüche, **dadurch gekennzeichnet, dass** die geometrische Oberfläche des Katalysators zur Oxidation von kohlenwasserstoffhaltigen PCDD- und PCDF- Vorläufersubstanzen mindestens 30% und höchstens 300% der geometrischen Oberfläche des übergangsmetallhaltigen SCR- Katalysators entspricht.

15. Vorrichtung nach einem der vorhergehenden Ansprüche, **dadurch gekennzeichnet, dass** die geometrische Oberfläche des Katalysators zur Zersetzung von PCDD und PCDF mindestens 30 % und höchstens 300 % der geometrischen Oberfläche des übergangsmetallhaltigen SCR-Katalysators entspricht.

16. Vorrichtung nach einem der vorhergehenden Ansprüche, **dadurch gekennzeichnet, dass** der übergangsmetallhaltige Katalysator zur selektiven katalytischen Reduktion von Stickoxiden und der Katalysator zur Zersetzung von PCDD und PCDF und der Katalysator zur Oxidation der kohlenwasserstoffhaltigen PCDD-/ PCDF- Vorläufersubstanzen in einem Schalldämpfergehäuse untergebracht sind.

## Claims

1. Apparatus for reducing emissions of polychlorinated dibenzodioxins (PCDD) and polychlorinated dibenzofurans (PCDF) from transition metal-containing catalysts for selective catalytic reduction of nitrogen oxides in the exhaust gas of an internal combustion engine using ammonia and/or ammonia-eliminating reductant, **characterized in that**
- at least one catalyst for oxidation of hydrocarbon-containing PCDD and PCDF precursor substances is arranged upstream of the at least one transition metal-containing SCR catalyst, wherein the at least one catalyst for oxidation of hydrocarbon-containing PCDD and PCDF precursor substances additionally has an activity for reduction of nitrogen oxides using ammonia,
- at least one catalyst for decomposition of PCDD and PCDF is arranged downstream of the at least one transition metal-containing SCR catalyst, wherein the at least one catalyst for oxidation of PCDD and PCDF additionally has an activity for reduction of nitrogen oxides using ammonia,
- the transition metal-containing catalysts for selective catalytic reduction of nitrogen oxides and the catalyst for decomposition of PCDD and PCDF and the catalyst for oxidation of hydrocarbon-containing PCDD and PCDF precursor substances are applied to the particulate filter,
- the catalyst for oxidation of the hydrocarbon-containing PCDD and PCDF precursor substances is on the untreated gas side of the particulate filter and the catalyst for decomposition of PCDD and PCDF is on the treated gas side of the particulate filter.

2. Process according to Claim 1, **characterized in that** the transition metals are selected from iron and/or copper and/or cobalt.

3. Process according to Claim 1 or 2, **characterized in that** the catalyst for decomposition of PCDD and PCDF contains tungsten and/or titanium and/or lanthanum and/or molybdenum and/or cerium and/or manganese and/or vanadium and/or oxides thereof as active components.

4. Apparatus according to any of the preceding claims, **characterized in that** the catalyst for oxidation of the PCDD and PCDF precursor substances contains tungsten and/or lanthanum and/or molybdenum and/or cerium and/or manganese and/or vanadium and/or oxides thereof as active components.

5. Apparatus according to any of the preceding claims, **characterized in that** the transition metal-containing catalyst for selective catalytic reduction of nitrogen oxides and/or the catalyst for oxidation of the hydrocarbon-containing PCDD and PCDF precursor substances contains zeolites.

6. Apparatus according to any of the preceding claims, **characterized in that** the catalyst for decomposition of PCDD and PCDF contains zeolites.

7. Apparatus according to Claim 5 or 6, **characterized in that** the zeolites comprise framework structures of the type AEN and/or OSI and/or EPI and/or ERI and/or FER and/or FAU and/or OFF and/or MFI and/or LTL and/or VFI and/or MAZ and/or MEI and/or EMT and/or CHA and/or KFI and/or BEA and/or MFS and/or MEL and/or MTW and/or EUO and/or MTT and/or HEU and/or FER and/or TON and/or MOR.

8. Apparatus according to Claims 5 to 7, **characterized in that** the zeolites are of the type mordenite and/or epistilbite and/or chabazite and/or erionite and/or mazzite and/or ferrierite and/or faujasite and/or offretite and/or ZSM-3 and/or ZSM-4 and/or ZSM-5 and/or ZSM-12 and/or ZSM-18 and/or ZSM-20 and/or ZSM-22 and/or ZSM-23 and/or ZSM-34 and/or ZSM-35 and/or ZSM-38 and/or ZSM-48 and/or ZSM-50 and/or omega and/or beta and/or zeolite A and/or zeolite L and/or zeolite Y and/or zeolite X and/or ZK-4 and/or ZK-5 and/or ZK-14 and/or ZK-20 and/or ZK-21 and/or ZK22 alone or in any desired combination.

9. Apparatus according to any of the preceding claims, **characterized in that** the transition metal-containing catalyst for selective catalytic reduction of nitrogen oxides and/or the catalyst for oxidation of hydrocarbon-containing PCDD and PCDF precursor substances is produced by coating an especially ceramic or metallic support.

10. Apparatus according to any of the preceding claims, **characterized in that** the catalyst for decomposition of PCDD and PCDF is produced by coating an especially ceramic or metallic support.

11. Apparatus according to any of the preceding claims, **characterized in that** the transition metal-containing SCR catalyst is produced by coating a particulate filter with a transition metal-containing zeolite and at least one transition metal on the catalyst surface facing the untreated gas side is exchanged by ion exchange for at least another metal having an oxidation activity for hydrocarbon-containing PCDD and/or PCDF precursor substances.

12. Apparatus according to any of Claims 1 to 10, **characterized in that** the transition metal-containing SCR catalyst is produced by coating a particulate filter and a catalyst for oxidation of hydrocarbon-containing PCDD and/or PCDF precursor substances is applied using a washcoat on the untreated gas side.

13. Apparatus according to any of the preceding claims, **characterized in that** the particulate filter is made of metal and/or sintered metal and/or ceramic and/or foam and/or ceramic fibers and/or quartz fibers and/or glass fibers and/or silicon carbide and/or aluminium titanate.

14. Apparatus according to any of the preceding claims, **characterized in that** the geometric surface area of the catalyst for oxidation of hydrocarbon-containing PCDD and PCDF precursor substances corresponds to at least 30% and at most 300% of the geometric surface area of the transition metal-containing SCR catalyst.

15. Apparatus according to any of the preceding claims, **characterized in that** the geometric surface area of the catalyst for decomposition of PCDD and PCDF is at least 30% and at most 300% of the geometric surface area of the transition metal-containing SCR catalyst.

16. Apparatus according to any of the preceding claims, **characterized in that** the transition metal-containing catalyst for selective catalytic reduction of nitrogen oxides and the catalyst for decomposition of PCDD and PCDF and the catalyst for oxidation of the hydrocarbon-containing PCDD/PCDF precursor substances are accommodated in a silencer housing.

## Revendications

1. Dispositif pour la réduction des émissions de dibenzo-dioxines polychlorées (PCDD) et de dibenzo-furannes polychlorés (PCDF) de catalyseurs contenant un métal de transition pour la réduction catalytique sélective d'oxydes d'azote dans le gaz échappement d'un moteur à combustion interne à l'aide d'ammoniac et/ou d'agents de réduction d'élimination d'ammoniac, **caractérisé en ce que**
- en amont de l'au moins un catalyseur de SCR contenant un métal de transition est disposé au moins un catalyseur pour l'oxydation de substances précurseurs de PCDD et de PCDF contenant un hydrocarbure, l'au moins un catalyseur pour l'oxydation de substances précurseurs de PCDD et de PCDF contenant un hydrocarbure présentant de plus une activité pour la réduction d'oxydes d'azote à l'aide d'ammoniac,
- en aval de l'au moins un catalyseur de SCR contenant un métal de transition est disposé au moins un catalyseur pour la décomposition de PCDD et de PCDF, l'au moins un catalyseur pour la décomposition de PCDD et de PCDF présentant de plus une activité pour la réduction d'oxydes d'azote à l'aide d'ammoniac,
- le catalyseur contenant un métal de transition pour la réduction catalytique sélective d'oxydes d'azote et le catalyseur pour la décomposition de PCDD et de PCDF et le catalyseur pour l'oxydation de substances précurseurs de PCDD et de PCDF contenant un hydrocarbure sont déposés sur le filtre à particules,
- le catalyseur pour l'oxydation de substances précurseurs de PCDD et de PCDF contenant un hydrocarbure est formé du côté du gaz brut du filtre à particules et le catalyseur pour la décomposition de PCDD et de PCDF est formé du côté du gaz pur du filtre à particules.

2. Dispositif selon la revendication 1, **caractérisé en ce que** les métaux de transition sont le fer et/ou le cuivre et/ou le cobalt.

3. Dispositif selon la revendication 1 ou 2, **caractérisé en ce que** le catalyseur pour la décomposition de PCDD et de PCDF contient en tant que composants actifs du tungstène et/ou du titane et/ou du lanthane et/ou du molybdène et/ou du cérium et/ou du manganèse et/ou du vanadium et/ou leurs oxydes.

4. Dispositif selon l'une quelconque des revendications précédentes, **caractérisé en ce que** le catalyseur pour l'oxydation de substances précurseurs de PCDD et de PCDF contient en tant que composants actifs du tungstène et/ou du lanthane et/ou du molybdène et/ou du cérium et/ou du manganèse et/ou du vanadium et/ou leurs oxydes.

5. Dispositif selon l'une quelconque des revendications précédentes, **caractérisé en ce que** le catalyseur contenant un métal de transition pour la réduction catalytique sélective d'oxydes d'azote et/ou le catalyseur pour l'oxydation de substances précurseurs de PCDD et de PCDF contenant un hydrocarbure contiennent des zéolithes.

6. Dispositif selon l'une quelconque des revendications précédentes, **caractérisé en ce que** le catalyseur pour la décomposition de PCDD et de PCDF contient des zéolithes.

7. Dispositif selon la revendication 5 ou 6, **caractérisé en ce que** les zéolithes comprennent des structures réticulaires de type AEN et/ou OSI et/ou EPI et/ou ERI et/ou FER et/ou FAU et/ou OFF et/ou MFI et/ou LTL et/ou VFI et/ou MAZ et/ou MEI et/ou EMT et/ou CHA et/ou KFI et/ou BEA et/ou MFS et/ou MEL et/ou MTW et/ou EUO et/ou MTT et/ou HEU et/ou FER et/ou TON et/ou MOR.

8. Dispositif selon l'une quelconque des revendications 5 à 7, **caractérisé en ce que** les zéolithes sont de type mordénithe et/ou épistilbite et/ou chabazite et/ou érionite et/ou mazzite et/ou ferriérite et/ou faujasite et/ou offrétite et/ou ZSM-3 et/ou ZSM-4 et/ou ZSM-5 et/ou ZSM-12 et/ou ZSM-18 et/ou ZSM-20 et/ou ZSM-22 et/ou ZSM-23 et/ou ZSM-34 et/ou ZSM-35 et/ou ZSM-38 et/ou ZSM-48 et/ou ZSM-50 et/ou oméga et/ou bêta et/ou zéolithe A et/ou zéolithe L et/ou zéolithe Y et/ou zéolithe X et/ou ZK-4 et/ou ZK-5 et/ou ZK-14 et/ou ZK-20 et/ou ZK-21 et/ou ZK22, individuellement ou en une quelconque combinaison.

9. Dispositif selon l'une quelconque des revendications précédentes, **caractérisé en ce que** le catalyseur contenant un métal de transition pour la réduction catalytique sélective d'oxydes d'azote et/ou le catalyseur pour l'oxydation de substances précurseurs de PCDD et de PCDF contenant un hydrocarbure sont préparés par revêtement d'un support, en particulier céramique ou métallique.

10. Dispositif selon l'une quelconque des revendications précédentes, **caractérisé en ce que** le catalyseur pour la décomposition de PCDD et de PCDF est préparé par revêtement d'un support, en particulier céramique ou métallique.

11. Dispositif selon l'une quelconque des revendications précédentes, **caractérisé en ce que** le catalyseur de SCR contenant un métal de transition est préparé par revêtement d'un filtre à particules avec une zéolithe contenant un métal de transition et au moins un métal de transition au niveau de la surface de catalyseur orientée vers le côté du gaz brut est échangé par échange d'ions contre au moins un autre métal qui possède une activité d'oxydation pour des substances précurseurs de PCDD et/ou de PCDF contenant un hydrocarbure.

12. Dispositif selon l'une quelconque des revendications 1 à 10, **caractérisé en ce que** le catalyseur de SCR contenant un métal de transition est préparé par revêtement d'un filtre à particules et un catalyseur pour l'oxydation de substances précurseurs de PCDD et/ou de PCDF contenant un hydrocarbure est déposé sur le côté du gaz brut à l'aide d'une couche d'imprégnation.

13. Dispositif selon l'une quelconque des revendications précédentes, **caractérisé en ce que** le filtre à particules est constitué de métal et/ou de métal fritté et/ou de céramique et/ou de mousse et/ou de fibres de céramique et/ou de fibres de quartz et/ou de fibres de verre et/ou de carbure de silicium et/ou de titanate d'aluminium.

14. Dispositif selon l'une quelconque des revendications précédentes, **caractérisé en ce que** la surface géométrique du catalyseur pour l'oxydation de substances précurseurs de PCDD et de PCDF contenant un hydrocarbure correspond à au moins 30 % et au plus 300 % de la surface géométrique du catalyseur de SCR contenant un métal de transition.

15. Dispositif selon l'une quelconque des revendications précédentes, **caractérisé en ce que** la surface géométrique du catalyseur pour la décomposition de PCDD et de PCDF correspond à au moins 30 % et au plus 300 % de la surface géométrique du catalyseur de SCR contenant un métal de transition.

16. Dispositif selon l'une quelconque des revendications précédentes, **caractérisé en ce que** le catalyseur contenant un métal de transition pour la réduction catalytique sélective d'oxydes d'azote et le catalyseur pour la décomposition de PCDD et de PCDF et le catalyseur pour l'oxydation de substances précurseurs de PCDD/PCDF contenant un hydrocarbure sont logés dans un carter de silencieux.
